# EUROPÄISCHE PATENTSCHRIFT

(11) **EP 2 792 439 B1**
(45) Veröffentlichungstag und Bekanntmachung des Hinweises auf die Patenterteilung: **27.02.2019**
(21) Anmeldenummer: 14163659.7
(22) Anmeldetag: 07.04.2014
(51) Int. Cl.: B23B 31/107, B23B 31/00

(54) **Schnellwechselsystem für eine Werkzeugaufnahme**
Quick change system for a tool holder
Système de changement rapide pour un porte-outil

(30) Priorität: 18.04.2013 DE 102013103937
(43) Veröffentlichungstag der Anmeldung: 22.10.2014
(73) Patentinhaber: Bilz Werkzeugfabrik GmbH & Co. KG, 73760 Ostfildern (DE)
(72) Erfinder: Schneider, Werner, 73776 Altbach (DE)
(74) Vertreter: Witte, Weller & Partner Patentanwälte mbB

(56) Entgegenhaltungen:
- EP-A2- 0 206 612
- EP-A2- 1 930 106
- JP-A- H 058 106
- JP-A- H04 101 703
- US-A- 3 788 658

## Beschreibung

Die Erfindung betrifft ein Schnellwechselsystem für eine Werkzeugaufnahme, mit einer maschinenseitigen Aufnahme, an der eine Werkzeugaufnahme festlegbar ist.

Bei einem Schnellwechselsystem für eine Werkzeugaufnahme lässt sich eine Werkzeugaufnahme, die zur Aufnahme eines Werkzeuges, etwa eines Fräswerkzeuges, ausgebildet ist, lösbar an einer maschinenseitigen Aufnahme befestigen. Auf diese Weise können verschiedene bereits in einer Werkzeugaufnahme befestigte Werkzeuge mittels eines Wechslers an der maschinenseitigen Aufnahme befestigt werden.

Aus der EP 0 206 612 A2 ist ein derartiges Schnellwechselsystem gemäß dem Oberbegriff von Anspruch 1 bekannt. Hierbei wirkt die Werkzeugaufnahme mit einer maschinenseitigen Aufnahme zusammen, um durch axiales Verschieben einer Hülse einen automatischen Werkzeugwechsel zu erlauben.

In vielen Fällen wird zur Handhabung der Werkzeugaufnahme ein Roboter verwendet.

Bei bisherigen Systemen war es für eine Einführung der Werkzeugaufnahme in eine geeignete Ausnehmung an der Aufnahme notwendig, hierbei eine genaue winkelmäßige Ausrichtung sicherzustellen. Hierzu wurden bislang etwa eine Kombination aus einem Mitnehmersteg und einer Nut oder eine Kombination aus einer Passfeder und einer Nut verwendet.

Dies erfordert allerdings, dass entweder der Werkzeugwechsler, also zum Beispiel der Roboter, von sich aus eine genaue winkelmäßige Ausrichtung der Werkzeugaufnahme gewährleistet, um die vorgegebene Winkellage zu treffen, oder aber, dass die Werkzeugaufnahme zunächst in die zugeordnete Vertiefung der Aufnahme eingeführt und dann solange gedreht wird, bis etwa der Mitnehmersteg und die Nut miteinander fluchten.

Im ersten Fall ist eine sehr präzise Roboterausführung und eine geringe Nachgiebigkeit erforderlich, was zu höheren Kosten des Roboters führt. Im zweiten Fall ergeben sich eine deutlich kompliziertere Bewegungsmechanik und ein höherer Zeitbedarf beim Werkzeugwechsel.

Vor diesem Hintergrund liegt der Erfindung die Aufgabe zugrunde, ein Schnellwechselsystem für eine Werkzeugaufnahme zu schaffen, bei dem eine lagekorrekte Positionierung der Werkzeugaufnahme an einer maschinenseitigen Aufnahme erzielt werden kann, ohne dass eine vorherige winkelmäßige Ausrichtung erfolgt.

Diese Aufgabe wird erfindungsgemäß durch ein Schnellwechselsystem mit einer Werkzeugaufnahme gemäß Anspruch 1 gelöst.

Die Aufgabe der Erfindung wird auf diese Weise vollkommen gelöst.

Erfindungsgemäß wird eine automatische winkelmäßige Ausrichtung der Werkzeugaufnahme beim Einführen in den hohlzylindrischen Fortsatz der Aufnahme dadurch ermöglicht, dass sich die Spitzen der sternförmigen Stirnfläche beim Auftreffen an den ersten Kugeln ausrichten. Hat sich die Werkzeugaufnahme einmal auf diese Weise ausgerichtet, so gelangen die ersten Kugeln in die Längsnuten des zylindrischen Halteabschnitts, wodurch eine drehfeste Kopplung erreicht ist. Beim weiteren Einschieben in den hohlzylindrischen Fortsatz erfolgt schließlich eine Festlegung in Axialrichtung, wenn die zweiten Kugeln in ihre zugeordneten Vertiefungen am zylindrischen Halteabschnitt gelangen.

Die Werkzeugaufnahme kann in einer bevorzugten Ausführung als Spannzangenaufnahme ausgebildet sein. Jedoch sind auch beliebige andere Ausführungen der Werkzeugaufnahme im Zusammenhang mit der Erfindung denkbar.

In bevorzugter Weiterbildung der Erfindung sind am zylindrischen Halteabschnitt sechs Längsnuten in gleichmäßigen Winkelabständen zueinander angeordnet, wobei die zweiten Vertiefungen jeweils im Bereich zwischen zwei benachbarten Längsnuten angrenzend an die Spitzen angeordnet sind.

Hierbei ergibt sich eine optimale Dimensionierung für einen Durchmesserbereich in der Größenordnung von 15 mm. Es versteht sich, dass natürlich auch mehr oder weniger Längsnuten und zweite Vertiefungen vorgesehen sein können.

Gemäß einer weiteren Ausgestaltung der Erfindung sind jeweils drei erste Kugeln und drei zweite Kugeln vorgesehen, die mit den Längsnuten bzw. den zweiten Vertiefungen zusammenwirken.

Auf diese Weise ist eine sichere Fixierung gewährleistet.

Gemäß einer weiteren Ausgestaltung der Erfindung ist die Schalthülse federnd in eine Verriegelungsstellung beaufschlagt, in der die zweiten Kugeln bei eingesetzter Werkzeugaufnahme in den zweiten Vertiefungen verriegelt sind.

Auf diese Weise ist eine automatische Verriegelung der Werkzeugaufnahme in Axialrichtung ermöglicht.

Gemäß einer weiteren Ausgestaltung der Erfindung sind die ersten Vertiefungen im Wesentlichen kugelabschnittsförmig zur teilweisen Aufnahme der ersten Kugeln ausgebildet und gehen jeweils über einen zugeordneten Übergangsabschnitt in eine der Längsnuten über.

Auf diese Weise wird die Ausrichtung des zylindrischen Halteabschnitts an den ersten Kugeln erleichtert. Der zylindrische Halteabschnitt bewegt sich beim Anschlag der sternförmigen Stirnfläche an den ersten Kugeln winkelmäßig derart, dass die ersten Kugeln in die zugeordneten ersten Vertiefungen gelangen und dann über den zugeordneten Übergangsabschnitt in die Längsnuten.

Gemäß einer weiteren Ausgestaltung der Erfindung ist in der Aufnahme ein zentraler, federnd beaufschlagter Sperrring vorgesehen, der die zweiten Kugeln radial nach außen in die zugeordneten Vertiefungen der Schalthülse drückt und in dieser Stellung sperrt, wenn keine Werkzeugaufnahme eingesetzt ist.

Gemäß einer Weiterbildung dieser Ausführung ist der Sperrring derart angeordnet, dass dieser auf Druck der Stirnfläche des zylindrischen Halteabschnitts in Axialrichtung nachgibt, so dass die zweiten Kugeln in die zweiten Vertiefungen gelangen und sich die Schalthülse unter Wirkung ihrer Vorspannung in eine Verriegelungsstellung bewegt, in der die zweiten Kugeln in den zweiten Vertiefungen verriegelt sind.

Durch diese Maßnahmen können die zweiten Kugeln vor dem Einführen der Werkzeugaufnahme und zunächst durch den Sperrring in einer geeigneten im Sperrring versenkten Stellung gehalten werden, bis schließlich die Stirnfläche des zylindrischen Halteabschnitts am Sperrring anschlägt Dies führt zu einem Nachgeben des Sperrrings und weiter dazu, dass die zweiten Kugeln unter der Wirkung der Vorspannung der Schalthülse in die zweiten Vertiefungen gelangen und so schließlich die Werkzeugaufnahme in Axialrichtung verriegelt gehalten ist.

Mit dem vorstehend beschriebenen Schnellwechselsystem ist eine automatische winkelmäßige Einstellung der Werkzeugaufnahme gewährleistet. Dies setzt jedoch voraus, dass der verwendete Greifer bzw. Roboter eine entsprechende Nachgiebigkeit von etwa +/- 30° (bei Verwendung von sechs Längsnuten) aufweist. Dies ist bei vielen Roboterarmen der Fall. Es gibt jedoch auch vergleichsweise starre Systeme, die keine derartige Nachgiebigkeit aufweisen.

Für diesen Fall kann die Werkzeugaufnahme eine verdrehbare Aufnahme für einen Greifer aufweisen.

Damit wird eine entsprechende winkelmäßige Verstellung der Aufnahme in Bezug auf den Greifer ermöglicht, wenn die Werkzeugaufnahme beim Einführen in den hohlzylindrischen Fortsatz an den ersten Kugeln ausgerichtet wird.

Hierzu kann etwa an der Werkzeugaufnahme ein Greiferbund mit einer Greifernut verdrehbar festgelegt sein.

Dies kann etwa mittels eines Rings erfolgen, der drehbar auf einer Außenoberfläche der Werkzeugaufnahme gehalten und in Axialrichtung gesichert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erste Ausführung eines erfindungsgemäßen Schnellwechselsystems im Längsschnitt, wobei eine Werkzeugaufnahme in Form einer Spannzangenaufnahme vollständig in einen hohlzylindrischen Fortsatz einer maschinenseitigen Aufnahme eingeführt und dort verriegelt ist;
- Fig. 2: einen Schnitt längs der Linie D-D gemäß Fig. 1;
- Fig. 3: einen Schnitt gemäß der Linie E-E gemäß Fig. 1;
- Fig. 4: einen Teil-Längsschnitt gemäß der Linie C-C gemäß Fig. 2;
- Fig. 5: eine vergrößerte perspektivische Teilansicht des zylindrischen Halteabschnitts in einer Ansicht von schräg vorn und
- Fig. 6: eine Abwandlung der Ausführung gemäß Fig. 1, wobei die Spannzangenaufnahme zusätzlich eine verdrehbare Aufnahme für einen Greifer aufweist.

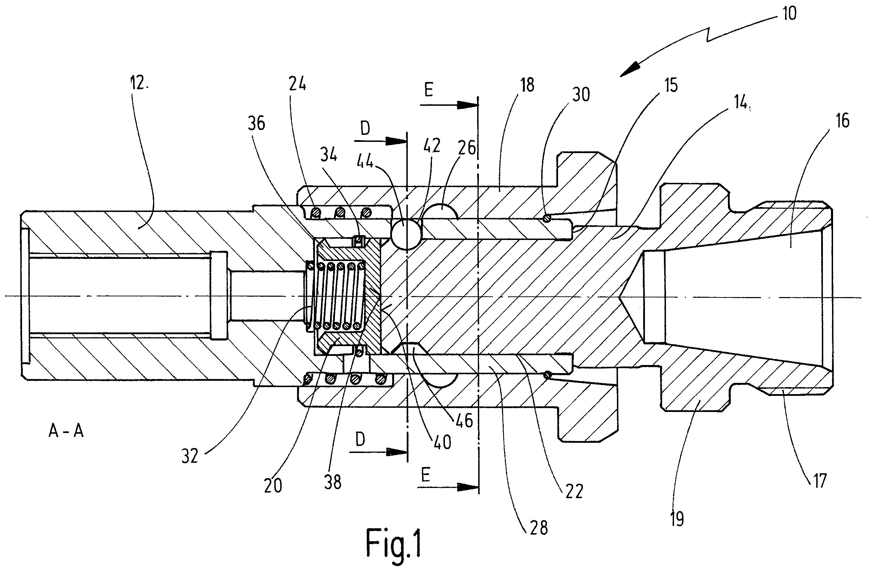

In Fig. 1 ist ein erfindungsgemäßes Schnellwechselsystem insgesamt mit der Ziffer 10 bezeichnet.

Das Schnellwechselsystem 10 weist eine maschinenseitige Aufnahme 12 auf mit einem hohlzylindrischen Fortsatz 28, auf dem eine Schalthülse 18 federbeaufschlagt gehalten ist.

In den vom hohlzylindrischen Fortsatz 28 umschlossenen Hohlraum kann eine Werkzeugaufnahme 14 in Form einer Spannzangenaufnahme mit einem zylindrischen Halteabschnitt 22 eingesetzt und dort verriegelt werden, wie im Folgenden noch näher erläutert wird.

Die Werkzeugaufnahme 14 weist an ihrem äußeren Ende einen Spannkegel 16 und ein Außengewinde 17 auf, das von einem Bund 19 gefolgt ist.

Der Bund 19 dient etwa zur Handhabung mit Hilfe eines Roboters oder eines anderen Wechslers. Im Spannkegel 16 wird ein Werkzeug eingesetzt, das zusätzlich durch eine aufgeschraubte Mutter gesichert werden kann.

Die erfindungsgemäße Ausführung des Schnellwechselsystems 10 ermöglicht es, beim Einführen der Werkzeugaufnahme 14 mit ihrem Halteabschnitt 22 in den hohlzylindrischen Fortsatz 28, dass sich dieser automatisch in eine vorbestimmte Winkelposition ausrichtet und schließlich bei Erreichen seiner axialen Endstellung verriegelt wird.

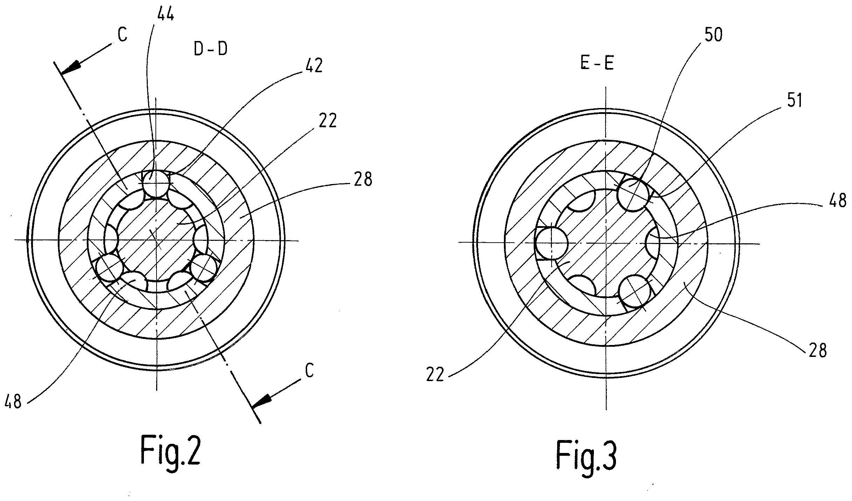

Zur axialen Verriegelung dienen insgesamt drei zweite Kugeln 44 (vgl. Fig. 1 und Fig. 2), die in radialen Ausnehmungen des hohlzylindrischen Fortsatzes 28 jeweils um 120° zueinander versetzt gehalten sind und die in zugeordnete zweite Vertiefungen 46 am Ende des zylindrischen Halteabschnitts 22 eingreifen. In der in Fig. 1 gezeigten Verriegelungsstellung sind die zweiten Kugeln 44 von der Innenoberfläche der Schalthülse 18 an einem Ausweichen nach außen gehindert, so dass sich eine Verriegelung ergibt. In der Verriegelungsstellung liegt die Werkzeugaufnahme 14 mit einem an das äußere Ende des zylindrischen Halteabschnitts 22 angrenzenden Bund 15 am äußeren Ende des hohlzylindrischen Fortsatzes 28 an.

Die Schalthülse 18 ist durch ein Federelement 24 in die Verriegelungsstellung vorgespannt und befindet sich in ihrer Endlage, die durch Anschlag an einem Sicherungsring 30 begrenzt ist.

Aus dieser Verriegelungsstellung 18 kann die Schalthülse 18 entgegen der Kraft eines Federelementes 24, das als Schraubenfeder ausgeführt ist, in Richtung auf die Aufnahme 12 bewegt werden. Dies führt dazu, dass Ausnehmungen 26 an der Innenoberfläche der Schalthülse 18 mit den zugeordneten zweiten Kugeln 44 ausgerichtet werden, so dass diese bei Herausziehen der Werkzeugaufnahme 14 aus dem hohlzylindrischen Fortsatz 28 in die Vertiefungen 26 radial nach außen ausweichen können, so dass die axiale Verriegelung der Werkzeugaufnahme 14 aufgehoben ist und diese einfach nach außen herausgezogen werden kann.

Mit den zweiten Kugeln 44 wirkt ein zentraler Sperrring 20 zusammen, der am maschinenseitigen Ende des hohlzylindrischen Fortsatzes 28 aufgenommen ist und durch ein Federelement 32 in Form einer Schraubenfeder nach außen hin vorgespannt ist. Der Sperrring 20 weist eine topfförmige Grundform auf und liegt in der in Fig. 1 gezeigten Verriegelungsstellung mit seiner äußeren Stirnfläche 38 an der Stirnfläche 40 des zylindrischen Halteabschnitts 22 an.

Wird nun die Schalthülse 18 entgegen der Wirkung ihrer Federspannung in Richtung auf die Aufnahme 12 bewegt, so dass die zweiten Kugeln 44 freigegeben werden und in die zugeordneten Vertiefungen 26 an der Schalthülse 16 gelangen, so bewegt sich beim Herausziehen der Werkzeugaufnahme 14 gleichzeitig der Sperrring 20 unter der Wirkung seiner Federspannung nach außen und sperrt die zweiten Kugeln 44 in den Vertiefungen 26. Somit wird die Schalthülse 18 in dieser Stellung gehalten und durch den Sperrring 20 verriegelt. Der Sperrring 20 befindet sich hierbei in seiner axialen Endstellung, da er mit einem maschinenseitigen Absatz 36 an einem Sicherungsring 34 anschlägt.

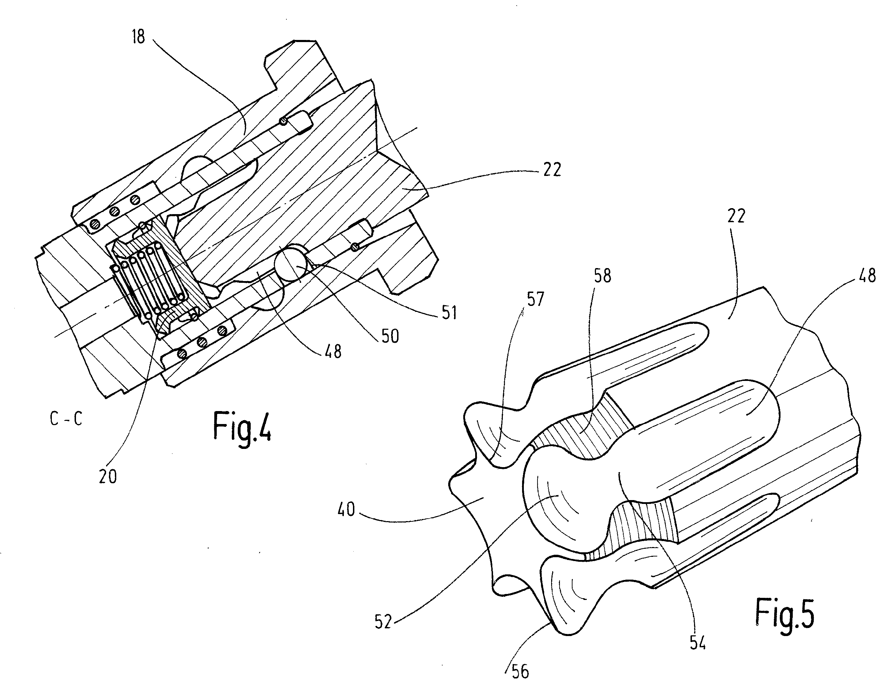

Wie aus Fig. 3 und 4 näher zu ersehen ist, sind axial zu den zweiten Kugeln 44 versetzt und winkelmäßig dazu um einen Betrag von 30° versetzt drei erste Kugeln 50 in zugeordneten radialen Ausnehmungen 51 des hohlzylindrischen Absatzes 28 aufgenommen. Die ersten Kugeln 50 greifen in zugeordnete Längsnuten 50 am zylindrischen Halteabschnitt 22 ein und erlauben so eine Drehmomentübertragung von der Aufnahme 12 auf die Werkzeugaufnahme 14.

Um beim Einführen der Werkzeugaufnahme 14 mit ihrem zylindrischen Halteabschnitt 22 in den hohlzylindrischen Fortsatz 28 eine winkelmäßige Ausrichtung zu gewährleisten, ist die Stirnfläche 40 des zylindrischen Halteabschnitts 22 sternförmig ausgebildet, mit insgesamt sechs Spitzen 56, wobei jeweils zwei benachbarte Spitzen 56 durch konkav nach außen verlaufende Krümmungen 57 miteinander verbunden sind. Wie aus Fig. 5 näher zu ersehen ist, begrenzt eine solche Krümmung 57 jeweils eine im Wesentlichen kugelabschnittsförmig gekrümmte erste Vertiefung 52, die über einen Übergangsabschnitt 54 in eine der Längsnuten 48 übergeht.

Zwischen jeweils zwei benachbarten Längsnuten 48 ist eine zweite Vertiefung 58 angeordnet, die unmittelbar an eine der Spitzen 56 angrenzt.

Mit einer derartigen Anordnung wird die winkelmäßige Ausrichtung der Werkzeugaufnahme 14 beim Einführen in den hohlzylindrischen Fortsatz 28 wie folgt erreicht:

Zunächst schlägt die Stirnfläche 40 mit ihren Spitzen 56 an den ersten Kugeln 50 an, was dazu führt, dass sich der zylindrische Halteabschnitt 22 derart winkelmäßig verdreht, dass die ersten Kugeln 50 in die ersten Vertiefungen 52 gelangen. Bei weiterem Einschieben in den hohlzylindrischen Fortsatz 28 gelangen die ersten Kugeln 50 über die angrenzenden Übergangsabschnitte 54 in ihre zugeordneten Längsnuten 48, so dass die in Fig. 4 gezeigte Stellung erreicht wird.

Sobald die Stirnfläche 40 an der Stirnfläche 38 des Sperrrings 20 anschlägt, wird dieser gegen die Wirkung seiner Federkraft axial verschoben, wodurch die zweiten Kugeln 44 unter der Wirkung der Vorspannung der Schalthülse 18 in die zweiten Vertiefungen 46 gelangen, sobald diese mit den zweiten Ausnehmungen 42 am hohlzylindrischen Fortsatz 28 ausgerichtet sind. Sobald die zweiten Kugeln 44 aus den Vertiefungen 26 der Schalthülse 18 vollständig freigegeben sind, bewegt sich die Schalthülse 18 unter der Wirkung ihrer Federspannung in die in Fig. 1 und 4 gezeigte Endstellung, wodurch die zweiten Kugeln 44 in den zugeordneten zweiten Vertiefungen 42 verriegelt sind und somit die Werkzeugaufnahme 14 in Axialrichtung gesichert ist. Damit ist eine axial gesicherte und drehfeste Verbindung der Werkzeugaufnahme 14 mit der Aufnahme 12 erreicht.

Soll die Werkzeugaufnahme 14 etwa für einen Werkzeugwechsel wieder aus der Aufnahme 12 entfernt werden, so wird die Schalthülse 18 gegen die Wirkung ihres Federelementes 24 bewegt, bis die Vertiefungen 26 mit den zweiten Kugeln 44 ausgerichtet sind, so dass beim Herausziehen die zweiten Kugeln 44 in die Vertiefungen 26 gelangen und, wie vorstehend bereits beschrieben, die Schalthülse 18 in dieser Stellung gehalten wird und die zweiten Kugeln 44 durch den Sperrring 20 in dieser Stellung gesichert werden.

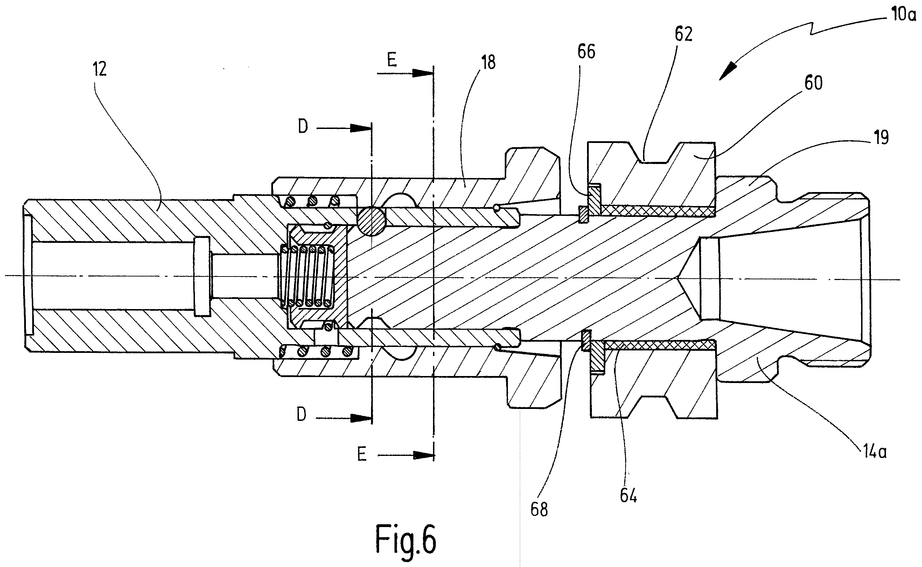

Eine Abwandlung der Ausführung gemäß Fig. 1 ist in Fig. 6 dargestellt und insgesamt mit 10a bezeichnet.

Der Aufbau des Schnellwechselsystems 10a entspricht vollständig dem zuvor beschriebenen Aufbau des Schnellwechselsystems 10 mit den einzigen Unterschied, dass an der Werkzeugaufnahme 14a zusätzlich ein Greiferbund 60 mit einer Greifernut 82 drehbar festgelegt ist. Hierzu kann der Greiferbund 60 etwa mittels eines Rings 64 auf einer Außenoberfläche der Werkzeugaufnahme 14a angrenzend an den Bund 19 drehbar festgelegt sein. Der Greiferbund 60 grenzt unmittelbar an den Bund 19 an und ist durch einen Befestigungsring 66 mittels eines Sicherungsrings 68 axial festgelegt.

Da der Greiferbund 60 eine Relativdrehung zur Werkzeugaufnahme 14a erlaubt, kann eine solche Ausführung verwendet werden, sofern der verwendete Greifer bzw. Roboter keine ausreichende Winkelnachgiebigkeit erlaubt, um eine Selbstausrichtung der Werkzeugaufnahme 14a beim Einführen in den hohlzylindrischen Fortsatz 28 zu erlauben.

In Fig. 6 sind im Übrigen für entsprechende Teile entsprechende Bezugsziffern wie bei Fig. 1 verwendet.

## Patentansprüche

1. Schnellwechselsystem mit einer Werkzeugaufnahme (14, 14a) und einer maschinenseitigen Aufnahme (12), die einen hohlzylindrischen Fortsatz (28) aufweist, auf dem eine Schalthülse (18) verschiebbar gehalten ist, wobei im Fortsatz (28) erste Kugeln (50) und axial dazu versetzt zweite Kugeln (44) gehalten sind, wobei die Werkzeugaufnahme (14, 14a) auf der der Aufnahme (12) zugewandten Seite einen zylindrischen Halteabschnitt (22) mit Längsnuten (48) aufweist, die mit den ersten Kugeln (50) zur drehfesten Festlegung der Werkzeugaufnahme (14, 14a) zusammenwirken, mit ersten Vertiefungen (52) zur Aufnahme der ersten Kugeln (50), und mit zweiten Vertiefungen (46) am zylindrischen Halteabschnitt (22), die mit den zweiten Kugeln (44) zusammenwirken, um die Werkzeugaufnahme (14, 14a) in Axialrichtung zu fixieren, wobei in der Schalthülse (18) den zweiten Kugeln (44) zugeordnete Vertiefungen (26) vorgesehen sind, die ein radiales Ausweichen nach außen erlauben, wenn diese mit den zweiten Kugeln (44) ausgerichtet sind, **dadurch gekennzeichnet, dass** die zweiten Kugeln (44) winkelmäßig versetzt zu den ersten Kugeln (50) angeordnet sind, dass eine sternförmige Stirnfläche (40) am Ende des zylindrischen Halteabschnitts (22) vorgesehen ist, dass die ersten Vertiefungen (52) zwischen jeweils benachbarten Spitzen (56) der Stirnfläche (40) zur Aufnahme und Führung der ersten Kugeln (50) in die Längsnuten (48) beim Einschieben in den hohlzylindrischen Fortsatz (28) ausgebildet sind, und dass die Spitzen (56) der sternförmigen Stirnfläche (40) zur winkelmäßigen Ausrichtung der Werkzeugaufnahme (14, 14a) an den ersten Kugeln (50) beim Einführen des Halteabschnitts (22) in den hohlzylindrischen Fortsatz (28) ausgebildet sind.

2. Schnellwechselsystem nach Anspruch 1, **dadurch gekennzeichnet, dass** am zylindrischen Halteabschnitt (22) sechs Längsnuten (48) in gleichmäßigen Winkelabständen zueinander angeordnet sind, und wobei die zweiten Vertiefungen (46) jeweils im Bereich zwischen zwei benachbarten Längsnuten (48) angrenzend an die Spitzen (56) angeordnet sind.

3. Schnellwechselsystem nach Anspruch 1 oder 2, **dadurch gekennzeichnet, dass** jeweils drei erste Kugeln (50) und drei zweite Kugeln (44) vorgesehen sind, die mit den Längsnuten (48) bzw. den zweiten Vertiefungen (46) zusammenwirken.

4. Schnellwechselsystem nach einem der vorhergehenden Ansprüche, **dadurch gekennzeichnet, dass** die Schalthülse (18) federnd in eine Verriegelungsstellung beaufschlagt ist, in der die zweiten Kugeln (44) bei eingesetzter Werkzeugaufnahme (14, 14a) in den zweiten Vertiefungen verriegelt sind.

5. Schnellwechselsystem nach einem der vorhergehenden Ansprüche, **dadurch gekennzeichnet, dass** die ersten Vertiefungen (52) im Wesentlichen kugelabschnittsförmig zur teilweisen Aufnahme der ersten Kugeln (50) ausgebildet sind und jeweils über einen zugeordneten Übergangsabschnitt (54) in eine der Längsnuten (48) übergehen.

6. Schnellwechselsystem nach einem der vorhergehenden Ansprüche, **dadurch gekennzeichnet, dass** in der Aufnahme (12) ein zentraler, federnd beaufschlagter Sperrring (20) vorgesehen ist, der die zweiten (44) Kugeln radial nach außen in die zugeordneten Vertiefungen der Schalthülse drückt und in dieser Stellung sperrt, wenn keine Werkzeugaufnahme (14, 14a) eingesetzt ist.

7. Schnellwechselsystem nach Anspruch 6, **dadurch gekennzeichnet, dass** der Sperrring (20) derart angeordnet ist, dass dieser auf Druck der Stirnfläche (40) des zylindrischen Halteabschnitts (22) in Axialrichtung nachgibt, so dass die zweiten Kugeln (44) in die zweiten Vertiefungen (46) gelangen und sich die Schalthülse (18) unter Wirkung ihrer Vorspannung in eine Verriegelungsstellung bewegt, in der die zweiten Kugeln (44) in den zweiten Vertiefungen (46) verriegelt sind.

8. Schnellwechselsystem nach einem der vorhergehenden Ansprüche, **dadurch gekennzeichnet, dass** die Werkzeugaufnahme (14a) eine verdrehbare Aufnahme für einen Greifer aufweist.

9. Schnellwechselsystem nach Anspruch 8, **dadurch gekennzeichnet, dass** an der Werkzeugaufnahme (14a) ein Greiferbund (60) mit einer Greifernut (62) verdrehbar festgelegt ist.

10. Schnellwechselsystem nach Anspruch 9, **dadurch gekennzeichnet, dass** der Greiferbund (60) mittels eines Rings (64) drehbar auf einer Außenoberfläche der Werkzeugaufnahme (14a) gehalten und in Axialrichtung gesichert ist.

## Claims

1. Quick-change system for a tool holder (14, 14a), comprising a machine-side receiving fixture (12) having a hollow-cylindrical extension (28) on which a switching sleeve (18) is displaceably held, wherein first balls (50), and offset axially and angularly thereto, second balls (44) are held in the extension (28), wherein the tool holder (14, 14a), on the side facing the receiving fixture (12), has a cylindrical holding portion (22) having longitudinal grooves (48) which cooperate with the first balls (50) for the rotationally fixed securement of the tool holder (14, 14a), comprising first depressions (52) for receiving the first balls (50), and comprising second depressions (46) on the cylindrical holding portion (22), which cooperate with the second balls (44) in order to fix the tool holder (14, 14a) in the axial direction, wherein in the switching sleeve (18) are provided depressions (26) assigned to the second balls (44), which depressions allow a radial veering in the outward direction if these are aligned with the second balls (44), **characterized in that** the second balls (44) are arranged angularly displaced with respect to the first balls (50), **in that** a star-shaped end face (40) is provided at the end of the cylindrical holding section (22), **in that** the first depressions (52) are formed between adjacent points (56) of the star-shaped end face (40) for receiving and guiding the first balls (50) into the longitudinal grooves (48) upon the insertion into the hollow-cylindrical extension (28), and **in that** the points (56) of the star-shaped end face (40) are configured for the angular alignment of the tool holder (14,14a) to the first balls (50) when the holding portion (22) is introduced into the hollow-cylindrical extension (28).

2. Quick-change system according to Claim 1, in which six longitudinal grooves (48) are arranged at regular angular intervals on the cylindrical holding portion (22), and wherein the second depressions (46) are respectively disposed in the region between two adjacent longitudinal grooves (48) adjoining the points (56).

3. Quick-change system according to claim 1 or 2, in which respectively three first balls (50) and three second balls (44) are provided, which balls cooperate with the longitudinal grooves (48) and the second depressions (46) respectively.

4. Quick-change system according to one of the preceding claims, in which the switching sleeve (18) is spring-loaded into a locking position, in which the second balls (44), once the tool holder (14, 14a) is inserted, are locked in place in the second depressions.

5. Quick-change system according to one of the preceding claims, in which the first depressions (52) are configured substantially in the shape of a spherical segment for the partial reception of the first balls (50) and merge respectively via an associated transition portion (54) into one of the longitudinal grooves (48).

6. Quick-change system according to one of the preceding claims, in which a central, spring-loaded locking ring (20), which forces the second balls (44) radially outwards into the associated depressions of the switching sleeve and, if no tool holder (14, 14a) is inserted, locks them in this position, is provided in the receiving fixture (12).

7. Quick-change system according to claim 6, in which the locking ring (20) is arranged such that it yields under pressure to the end face (40) of the cylindrical holding portion (22) in the axial direction, so that the second balls (44) make their way into the second depressions (46) and the switching sleeve (18) moves under the action of its pretension into a locking position in which the second balls (44) are locked in place in the second depressions (46).

8. Quick-change system according to one of the preceding claims, in which the tool holder (14a) has a twistable receiving fixture for a gripper.

9. Quick-change system according to claim 8, in which a gripper collar (60) is twistably secured to the tool holder (14a) with a gripper groove (62).

10. Quick-change system according to claim 9, in which the gripper collar (60) is held by means of a ring (64) rotatably on an outer surface of the tool holder (14a) and is secured in the axial direction.

## Revendications

1. Système de changement rapide avec un porte-outil (14, 14a) et un logement côté machine (12), qui présente un prolongement cylindrique creux (28), sur lequel une douille de commutation (18) est maintenue de façon coulissante, dans lequel des premières billes (50) et des deuxièmes billes (44) axialement décalées par rapport à celles-ci sont maintenues dans le prolongement (28), dans lequel le porte-outil (14, 14a) présente sur le côté tourné vers le logement (12) une partie de maintien cylindrique (22) avec des rainures longitudinales (48), qui coopèrent avec les premières billes (50) pour la fixation sans rotation du porte-outil (14, 14a), avec des premiers creux (52) destinés à recevoir les premières billes (50), et avec des deuxièmes creux (46) sur la partie de maintien cylindrique (22), qui coopèrent avec les deuxièmes billes (44) pour fixer le porte-outil (14, 14a) en direction axiale, dans lequel il est prévu dans la douille de commutation (18) des creux (26) associés aux deuxièmes billes (44), qui permettent un écartement radial vers l'extérieur, lorsque ceux-ci sont alignés avec les deuxièmes billes (44), **caractérisé en ce que** les deuxièmes billes (44) sont angulairement décalées par rapport aux premières billes (50), **en ce qu'**il est prévu une face frontale en forme d'étoile (40) à l'extrémité de la partie de maintien cylindrique (22), **en ce que** les premiers creux (52) sont formés entre des pointes respectivement voisines (56) de la face frontale (40) en vue de recevoir et de guider les premières billes (50) dans les rainures longitudinales (48) lors de l'insertion dans le prolongement cylindrique creux (28), et **en ce que** les pointes (56) de la face frontale en forme d'étoile (40) sont configurées en vue de l'alignement angulaire du porte-outil (14, 14a) sur les premières billes (50) lors de l'introduction de la partie de maintien (22) dans le prolongement cylindrique creux (28).

2. Système de changement rapide selon la revendication 1, **caractérisé en ce que** six rainures longitudinales (48) sont disposées sur la partie de maintien cylindrique (22) à distances angulaires égales l'une de l'autre, et dans lequel les deuxièmes creux (46) sont respectivement disposés dans la région située entre deux rainures longitudinales voisines (48) à proximité des pointes (56).

3. Système de changement rapide selon la revendication 1 ou 2, **caractérisé en ce qu'**il est prévu respectivement trois premières billes (50) et trois deuxièmes billes (44), qui coopèrent avec les rainures longitudinales (48) ou les deuxièmes creux (46).

4. Système de changement rapide selon l'une quelconque des revendications précédentes, **caractérisé en ce que** la douille de commutation (18) est appuyée élastiquement dans une position de verrouillage, dans laquelle les deuxièmes billes (44) sont verrouillées dans les deuxièmes creux (46) lorsque le porte-outil (14, 14a) est inséré.

5. Système de changement rapide selon l'une quelconque des revendications précédentes, **caractérisé en ce que** les premiers creux (52) sont réalisés essentiellement en forme de parties de sphère en vue de recevoir de façon partielle les premières billes (50) et se prolongent respectivement par une partie de transition (54) en une des rainures longitudinales (48).

6. Système de changement rapide selon l'une quelconque des revendications précédentes, **caractérisé en ce qu'**il est prévu dans le logement (12) une bague de blocage centrale (20) poussée élastiquement, qui repousse les deuxièmes billes (44) radialement vers l'extérieur dans les creux associés de la douille de commutation et les bloque dans cette position, lorsqu'aucun porte-outil (14, 14a) n'est engagé.

7. Système de changement rapide selon la revendication 6, **caractérisé en ce que** la bague de blocage (20) est disposée de telle manière qu'elle cède en direction axiale sous la pression de la face frontale (40) de la partie de maintien cylindrique (22), de telle manière que les deuxièmes billes (44) parviennent dans les deuxièmes creux (46) et que la douille de commutation (18) se déplace sous l'action de sa précontrainte dans une position de verrouillage, dans laquelle les deuxièmes billes (44) sont verrouillées dans les deuxièmes creux (46).

8. Système de changement rapide selon l'une quelconque des revendications précédentes, **caractérisé en ce que** le porte-outil (14a) présente un logement rotatif pour une pince.

9. Système de changement rapide selon la revendication 8, **caractérisé en ce qu'**un collet de pince (60) avec une gorge de pince (62) est fixé de façon rotative sur le porte-outil (14a).

10. Système de changement rapide selon la revendication 9, **caractérisé en ce que** le collet de pince (60) est maintenu de façon rotative sur une surface extérieure du porte-outil (14a) au moyen d'une bague (64) et est calé en direction axiale.
